# EUROPÄISCHE PATENTSCHRIFT

(11) **EP 0 633 322 B1**
(45) Veröffentlichungstag und Bekanntmachung des Hinweises auf die Patenterteilung: **28.02.2001**
(21) Anmeldenummer: 94250151.1
(22) Anmeldetag: 13.06.1994
(51) Int. Cl.: C21C 5/30

(54) **Verfahren zur Herstellung von Stahl mit niedrigem Phosphorgehalt**
Process for making steel with low phosphorus content
Procédé de production d'acier à faible teneur en phosphore

(30) Priorität: 15.06.1993 DE 4320573; 05.04.1994 DE 4412236
(43) Veröffentlichungstag der Anmeldung: 11.01.1995
(73) Patentinhaber: MANNESMANN Aktiengesellschaft, 40213 Düsseldorf (DE)
(72) Erfinder: Hanke, Klaus-Jürgen, Dipl.-Ing., D-47057 Duisburg (DE); Pfeiffer, Arnold, Dipl.-Ing., D-47809 Krefeld (DE); Rieche, Kurt, Dipl.-Ing., D-47249 Duisburg (DE)
(74) Vertreter: Meissner, Peter E., Dipl.-Ing.

(56) Entgegenhaltungen:
- EP-A- 0 572 848
- DE-C- 3 931 024
- STAHL UND EISEN, Bd.104, Nr.11, 28. Mai 1984, DUSSELDORF DE Seiten 527 - 532 H. GRUNER ET AL. 'Neue metallurgische Einsichten .....'
- STAHL UND EISEN, Bd.105, Nr.25, 16. Dezember 1985, DUSSELDORF DE Seiten 1443 - 1446 L. FIEGE ET AL. 'Direkter Konverterabstich .....'
- STAHL UND EISEN, Bd.105, Nr.9, 6. Mai 1985, DUSSELDORF DE Seiten 531 - 536 W. FLORIN ET AL. 'Einstellung niedriger Phosphorgehalte .....'

## Beschreibung

Die Erfindung betrifft ein Verfahren zur Herstellung von Stahl mit niedrigem Phosphorgehalt aus Roheisen, Schrott sowie Zuschlägen (Kalk) in einem Konverter, bei dem über eine Lanze Sauerstoff und über den Boden ein Spülgas in das Roheisen geblasen werden und die Entkohlung der Schmelze durch Messung des CO-Gehaltes des Abgases erfaßt wird.

Eine der bekannten Verfahren zur Erzielung niedrigster Phosphorgehalte ist in der DE 39 31 024 C1 beschrieben, bei dem im wesentlichen in einer ersten Blasphase die Schlackenschmelze auf eine bestimmte Basizität eingestellt wird, in einer zweiten Blasphase die Hauptentkohlung mit der parallel ablaufenden Entphosphorung des Roheisens durchgeführt wird und in einer dritten Phase während einer zur Einstellung des gewünschten Endkohlenstoffs ausreichenden Zeit die Auftreffenergie des Sauerstoffstrahls verringert wird bei gleichzeitiger Steigerung der Mindestmenge der über die Bodenblasdüsen eingeleiteten Inertgase.

Aus Stahl u. Eisen 104 (1984), Seiten 527 bis 532, wird ein Verfahren beschrieben, das unter Einsatz einer dynamischen Prozeßsteuerung niedrigste Phosphorgehalte im Stahl anstrebt. In den Bildern 4 und 6 einschließlich des zugehörigen Textes wird eine rechnergesteuerte Endpunktbestimmung mit Hilfe eines dynamischen Modells und einer Abgasanalyse sowie das Fertigblasen der Schmelze mit Sublanzenkontrolle beschrieben. Die Entscheidung über die Freigabe der Schmelze zum Abstich hängt von dem Ergebnis einer zweiten Sondenmessung unmittelbar nach Blasende im noch stehenden Konverter ab. Zu diesem Zeitpunkt liegt die chemische Analyse der Probe der ersten Sondenmessung beispielsweise mit den Phosphorwert vor. Abweichungen von den Sollwerten werden sofort durch Nachblasen korrigiert und das Ergebnis mit einer weiteren Sondenmessung festgestellt.

Diese Verfahren arbeiten hinsichtlich der Einstellung der Endtemperatur eines angestrebten, bestimmten Kohlenstoffgehaltes zufriedenstellend. Auch gelingt es, den Phosphorgehalt einigermaßen sicher zu treffen, wenn die Zusammensetzung der Einsatzstoffe im einzelnen bekannt ist. Es erfordert aber eine aufwendige Aufbereitung der Einsatzstoffe, wobei der Erfolg oft fraglich ist, z.B. beim Einsatz von sogenannten Bären, also einem Stahl-Schlacke-Gemisch. Erforderlich ist aber in jedem Fall eine Probennahme kurz vor und zur Kontrolle unmittelbar nach Blasende, um zu entscheiden, ob die Schmelze abgestochen werden kann oder nachgeblasen werden muß.

Weiterhin ist aus der Schrift DE 42 17 933 A1 ein Verfahren zur Bestimmung des Endpunktes für die Frischprozeß in Sauerstoffkonvertern bei der Stahlerzeugung bekannt, bei dem die zeitliche Änderung der Abgasbestandteile und/oder daraus abgeleiteter Parameter fortlaufend mit einer Sollkurve verglichen werden und nach Erfüllung vorgegebener Bedingungen die Sauerstoffzufuhr beendet wird. Mit hohem Meßaufwand werden in kurzen Zeitabständen einzelne Gasbestandteile gemessen, im wesentlichen die CO₂- und N₂-Anteile, über eine EDV-Anlage ausgewertet, wobei die gemessenen Abgaswerte von Analogwerten noch in Digitalwerte umgewandelt werden, und schließlich zur Abschaltung der Sauerstoffzufuhr verwendet.

Zum einen ist bei diesem Verfahren nicht zu entnehmen, welcher Einfluß auf einen niedrigen Phosphorgehalt genommen wird, zum anderen haftet diesen Verfahren der Nachteil der Zeitkomponente an, zwischen der Messung der dann erforderlichen Berechnung und schließlichen Reaktion, hier im wesentlichen auf die Steuerung der Sauerstoffzufuhr, mit anschließender erneuter Rechnung und Nachprüfung der erreichten bzw. nochmals zu korrigierenden Werte.

Der Erfindung liegt das Problem zugrunde, unter Reduzierung aufwendiger Aufbereitungsarbeiten der Einsatzstoffe, notwendiger Probenahme und zeitaufwendiger Berechnungen sicher die Stahltemperatur, den Kohlenstoffgehalt und den Phosphorgehalt am Ende eines einstufigen Blasverfahrens einzustellen.

Die Erfindung löst dieses Problem mit den im Hauptanspruch angegebenen kennzeichnenden Maßnahmen. In den Unteransprüchen sind vorteilhafte Weiterbildungen des Verfahrens aufgezeigt.

Während des Frischens, also beim Auf- bzw. Einblasen von Sauerstoff auf bzw. in die Stahlschmelze wird im wesentlichen Kohlenstoff oxidiert. Da am Ende des Sauerstoffblasens der Kohlenstoffgehalt relativ klein ist, tritt nun die Reaktion von Eisen mit Sauerstoff in den Vordergrund. Zum einen reagiert flüssiges Eisenoxid mit dem Feuerfestfutter des Konverters, zum anderen ist ein erhöhter Eisenoxidgehalt der Schlacke von Nachteil für die Erzeugung von Stahl mit hohem Reinheitsgrad.

Die Erfinder haben überraschenderweise festgestellt, daß kurz vor Blasende sich der Prozeß stabilisiert und es ausreichend ist, bei einem definierten Kohlenstoffabbrandwert bzw. Kohlenstoffabsolutwert die Stahltemperatur zu messen, diese mit der gewünschten Zieltemperatur zu vergleichen und bereits zu diesem Zeitpunkt ohne weitere Überprüfung in Form von Messungen, Probennahmen und Analysen unmittelbar die Sauerstoffmenge vorzugeben und den Stahl direkt aus dem Konverter abzustechen.

Zeigt zu diesem Zeitpunkt die Temperaturdifferenz, daß beim eingesetzten Sauerstoffgehalt sowohl die Zieltemperatur wie auch der gewünschte Fe0-Zielgehalt erreicht wird, so kann die entsprechende Sauerstoffmenge verblasen werden.

Zeigt jedoch die festgestellte Temperaturdifferenz Ist-Soll des Stahls, daß keine zur Erreichung des Fe0-Gehaltes ausreichende Sauerstoffmenge erforderlich wäre, so wird die Schmelze gezielt thermisch überblasen und die dabei auftretende Temperaturerhöhung wird durch Einsatz von Kühlmitteln ausgeglichen. Als Kühlmittel kommen hier im wesentlichen Erz, Sinter, Schlacke, Schrott und/oder Kalkstein zum Einsatz. Handelt es sich bei dem Einsatz des Kühlmittels um Sauerstoffträger, beispielsweise Erz, Sinter oder auch Schlacke, so ist die eingebrachte Sauerstoffmenge bei der Gesamtsauerstoffmenge zu berücksichtigen.

Der Absolutwert des im Abgas vorhandenen CO-Gehaltes, bei dem die Temperatur des Stahls gemessen wird, liegt zwischen 7 bis 1 %, vorzugsweise zwischen 3,5 bis 2,5 %. Der Kohlenstoffabbrandwert wird auf dC/dt 600 bis 300 kg/min vorgegeben.

Der FeO-Gehalt der Schmelze korreliert mit dem Phosphorgehalt wie auch mit dem Kohlenstoffgehalt. Die Gesamtsauerstoffmenge, also die Blassauerstoffmenge und die ggf. eingebrachte Sauerstoffmenge aus dem Kühlmittel, wird in Abhängigkeit des Zielgehaltes an Phosphor oder an Kohlenstoff eingestellt, in Abhängigkeit davon, welcher Wert der mit dem Fe0-Gehalt korrelierende der höhere ist. Gegebenenfalls wird zur Erreichen der Zieltemperatur der Schmelze noch ein Heizmittel in Form von Brennstoffen, FeSi oder Aluminium zugegeben.

Ein Beispiel der Erfindung ist in der beigefügten Zeichnung dargelegt. Dabei zeigen:
- Fig. 1: den Einfluß der Menge des Blassauerstoffs auf den Fe0-Gehalt in Abhängigkeit der gemessenen Temperaturdifferenz des Stahls,
- Fig. 2: die Korrelation zwischen Phosphor bzw. Kohlenstoff und dem Fe0-Gehalt des Stahls,
- Fig. 3: ein Flußdiagramm zur Bestimmung der Sauerstoff- bzw. Kühlmittelmenge zum Zeitpunkt der Messung der Temperaturdifferenz Ist - Ziel des Stahls.

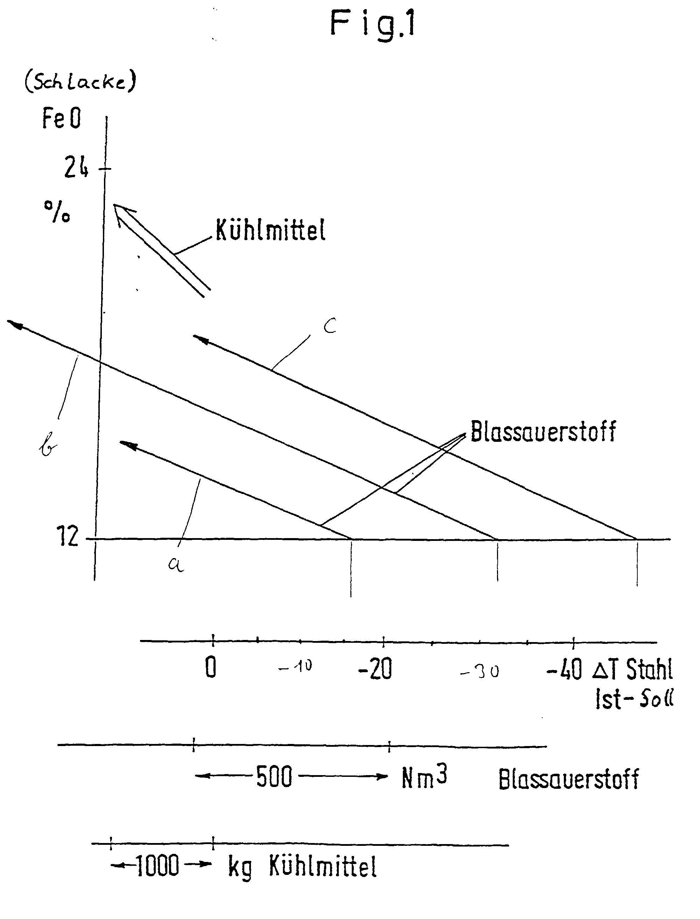

In der Fig. 1 ist die Abhängigkeit der Stahltemperatur sowie der Einfluß des Fe0-Gehaltes der Schmelze in Abhängigkeit des möglicherweise eingesetzten Blassauerstoffs bzw. des erforderlichen Kühlmittels gegeben. Dabei sind die Sauerstoffmengen absolut angegeben, da sie von der aktuellen Ist-Temperatur des Stahls und der gewünschten Zieltemperatur abhängen. Die dargestellten Pfeile zeigen nicht nur die eingesetzten Mengen an, sondern auch ihren Einfluß auf den FeO-Gehalt wie ihren Einfluß auf die Temperatur des Stahls. Beim mittleren Pfeil der Blassauerstoffmengen wird beispielsweise der Stahl thermisch überblasen, da hier ein bestimmter Fe0-Gehalt und hiermit ein korrelierender Phosphorgehalt erreicht werden soll. Die Überhitzung des Stahls wird durch den Einsatz von, ebenfalls in Absolutwerten angegebenen, Mengen an Kühlmittel auf das angestrebte Maß zurückgekühlt.

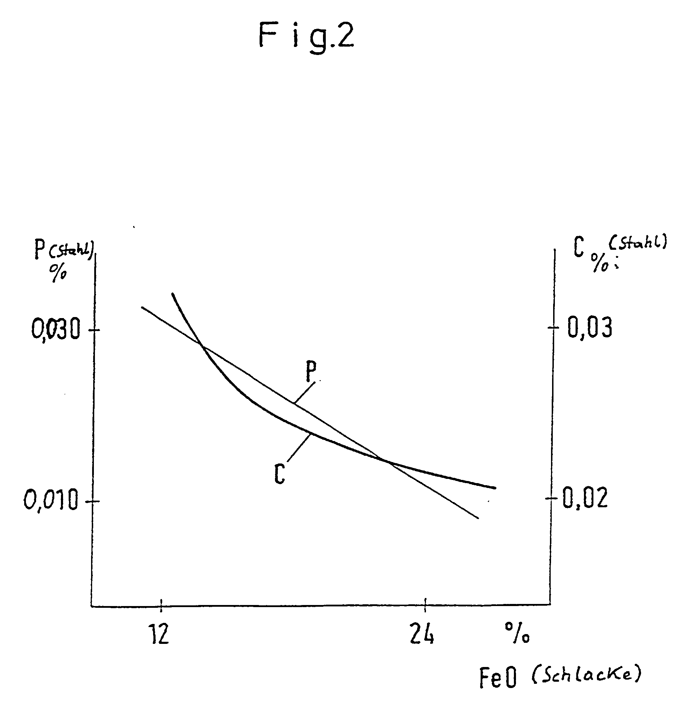

In der Fig. 2 sind die Abhängigkeiten des Fe0-Gehaltes einmal mit dem Phosphor und andererseits mit dem Kohlenstoff bei mittleren Stahlqualitäten angegeben.

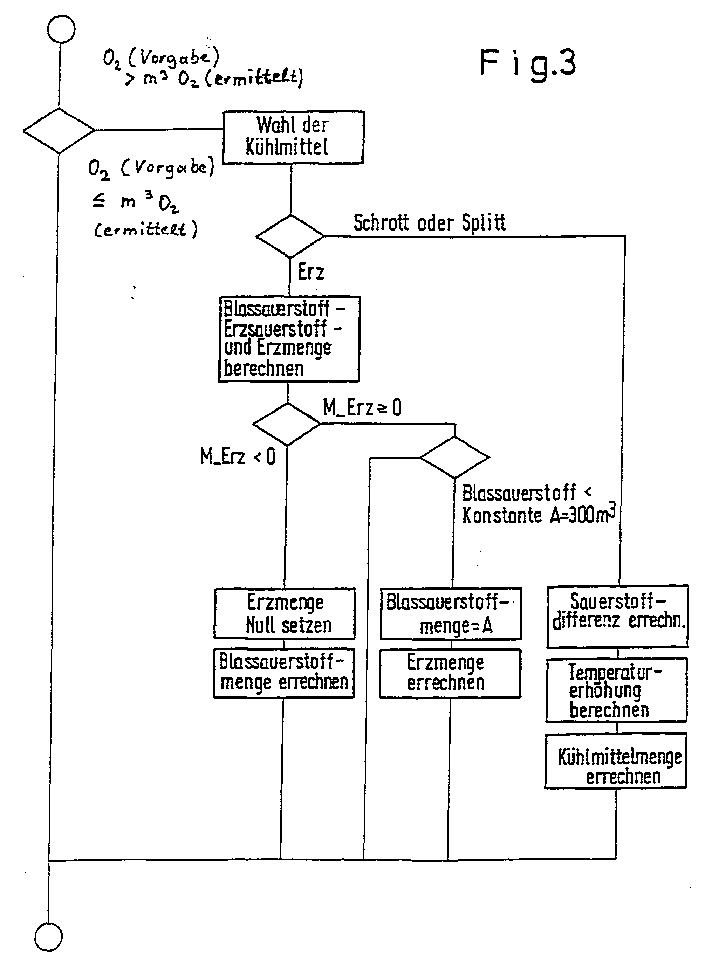

Die Fig. 3 zeigt in Form eines Flußdiagramms die erforderlichen Entscheidungsschritte zum Einsatz der Mengen an Blassauerstoff und/oder Kühlmittel.

## Patentansprüche

1. Verfahren zur Herstellung von Stahl mit niedrigem Phosphorgehalt aus Roheisen, Schrott sowie Zuschlägen (Kalk) in einem Konverter, bei dem über eine Lanze Sauerstoff und über den Boden ein Spülgas in das Roheisen geblasen werden und die Entkohlung der Schmelze durch Messung des CO-Gehaltes des Abgases erfaßt wird,
gekennzeichnet durch folgende Schritte:
a) kurz vor Blasende wird bei einem vorgebbaren Kohlenstoffabbrandwert oder Absolutwert des im Abgas vorhandenen CO-Gehaltes die Temperatur des Stahls gemessen,
b) diese Ist-Temperatur wird mit der Zieltemperatur des Stahls verglichen,
c) in Abhängigkeit von der Temperaturdifferenz Ist - Ziel wird eine noch zu verblasende Sauerstoffmenge bestimmt, mit der mit dem Phosphor- bzw. Kohlenstoffgehalt korrelierende Fe0-Gehalt in der Schlacke zum Schmelzende auf > 10 % einstellbar ist, mit der Maßgabe,
daß bei einer festgestellten Temperaturdifferenz:
- die ausreicht, sowohl die Ziel-Temperatur wie auch den FeO-Zielgehalt zu erreichen, eine entsprechende Sauerstoffmenge verblasen wird,
- die keine zur Erreichung des FeO -Gehaltes ausreichende Sauerstoffmenge erforderlich machen würde, die Schmelze gezielt thermisch überblasen wird und die dabei auftretende Temperaturüberhöhung des Stahls durch Einsatz von Kühlmitteln ausgeglichen wird,
d) zum Blasende wird ohne weitere Probenahme oder Temperaturmessung der Stahl direkt aus dem Konverter abgestochen.

2. Verfahren nach Anspruch 1,
dadurch gekennzeichnet,
daß der Kohlenstoffabbrand auf einen Wert dC/dt 600 bis 300 kg/min eingestellt wird.

3. Verfahren nach Anspruch 1,
dadurch gekennzeichnet,
daß der Absolutwert des im Abgas vorhandenen CO-Gehaltes zwischen 7 bis 1 %, vorzugsweise 3,5 bis 2,5 % beträgt.

4. Verfahren nach Anspruch 1,
dadurch gekennzeichnet,
daß als Kühlmittel im wesentlichen Erz, Sinter, Schlacke, Schrott und/oder Kalkstein eingesetzt wird.

5. Verfahren nach Anspruch 4,
dadurch gekennzeichnet,
daß beim Einsatz der sauerstofftragenden Kühlmittel Erz, Sinter und ggf. Schlacke die durch sie eingebrachte Sauerstoffmenge von der Blassauerstoffmenge abgezogen wird.

6. Verfahren nach Anspruch 5,
dadurch gekennzeichnet,
daß die Sauerstoffmenge in Abhängigkeit des Zielgehaltes an Phosphor oder Kohlenstoff der mit diesen korrelierenden höheren Fe0-Gehaltes gewählt wird.

7. Verfahren nach einem der vorgenannten Ansprüche,
dadurch gekennzeichnet,
daß bei einer zur Erreichung des Ziel-Phosphor- bzw. -Kohlenstoffgehaltes ausreichenden Sauerstoffmenge, bei der aber die Zieltemperatur nicht erreichbar ist, der Schmelze ein Heizmittel zugegeben wird.

8. Verfahren nach Anspruch 7,
dadurch gekennzeichnet,
daß als Heizmittel im wesentlichen fossile Brennstoffe, FeSi oder Aluminium Verwendung finden.

## Claims

1. Method of making steel with a low phosphorus content from pig iron, scrap iron and additives (lime) in a converter, whereby oxygen is blown through a lance and a scavenging gas through the bottom into the pig iron and the decarbonisation of the melt is detected by measuring the CO-content of the fumes, characterised by the following steps:
a) shortly before the end of blowing, at a predefinable carbon loss value or absolute value of the CO-content in the fumes, the temperature of the steel is measured,
b) this actual temperature is compared with the target temperature of the steel,
c) depending on the difference between the actual and target temperatures, a quantity of oxygen still to be blown is determined with which the FeO-content in the slag correlating with the phosphorus or carbon content at the end of melting can be set to more than 10%, so that when a temperature difference is detected:
- which is sufficient to achieve both the target temperature and the target FeO-content, a corresponding quantity of oxygen is blown,
- which would require no quantity of oxygen sufficient to reach the FeO-content, the melt is deliberately overblown thermally and the increase in the temperature of the steel occurring as a result is offset by introducing coolants,
d) at the end of blowing, without further sampling or temperature measurement, the steel is run off directly from the converter.

2. Method according to claim 1, characterised in that the carbon loss is set to a value dC/dt of 600 to 300 kg/min.

3. Method according to claim 1, characterised in that the absolute value of the carbon content present in the fumes is between 7 to 1%, preferably 3.5 to 2.5%.

4. Method according to claim 1, characterised in that essentially ore, sinter, slag, scrap iron and/or lime are introduced as coolants.

5. Method according to claim 4, characterised in that when the oxygen-bearing coolants ore, sinter and possibly slag are introduced, the quantity of oxygen introduced by them is subtracted from the quantity of oxygen blown.

6. Method according to claim 5, characterised in that the quantity of oxygen is selected according to the target content of phosphorus or carbon of the higher FeO-content correlating with these.

7. Method according to one of the preceding claims, characterised in that with a quantity of oxygen sufficient to reach the target phosphorus or carbon content, but with which the target temperature cannot be attained, a heating means is added to the melt.

8. Method according to claim 7, characterised in that essentially fossil fuels, FeSi or aluminium are used as heating means.

## Revendications

1. Procédé pour fabriquer de l'acier ayant une faible teneur en phosphore, à partir de fonte brute, de ferrailles, ainsi que de fondants (chaux) dans un convertisseur, dans lequel, par l'intermédiaire d'une lance, de l'oxygène et, par le fond, un gaz de balayage sont soufflés dans la fonte brute, et la décarburation de la matière en fusion est détectée par mesure de la teneur en CO du gaz d'échappement,
caractérisé par les étapes suivantes :
a) peu avant la fin du soufflage, la température de l'acier est mesurée pour une valeur absolue ou une valeur résiduelle de carbone, pouvant être prédéfinie, de la teneur en CO présent dans le gaz d'échappement,
b) cette température réelle est comparée à la température visée de l'acier,
c) de façon dépendant de la différence des températures réelle et visée, il est déterminé une quantité d'oxygène devant être encore soufflée, par laquelle la teneur en FeO corrélée à la teneur en phosphore ou en carbone peut être réglée dans le laitier à la fin de la fusion à une valeur supérieure à 10 %, sous réserve que, pour une différence de températures déterminée :
- qui suffit à atteindre aussi bien la température visée qu'également la teneur visée en FeO, une quantité d'oxygène correspondante est soufflée,
- qui ne rendrait pas nécessaire une quantité d'oxygène suffisante pour atteindre la teneur en FeO, la matière en fusion est thermiquement sursoufflée de façon visée et l'augmentation de température résultante de l'acier est compensée par l'utilisation de moyens de refroidissement,
d) à la fin du soufflage, l'acier est directement coulé hors du convertisseur sans autre prise d'échantillon ou mesure de température.

2. Procédé selon la revendication 1,
caractérisé en ce que le résidu de carbone est réglé à une valeur dC/dt de 600 à 300 kg/mn.

3. Procédé selon la revendication 1,
caractérisé en ce que la valeur absolue de la teneur en CO existant dans le gaz d'échappement vaut entre 7 et 1 %, avantageusement 3,5 et 2,5 %.

4. Procédé selon la revendication 1,
caractérisé en ce que, comme moyens de refroidissement, il est utilisé généralement du minerai, de la calamine, du laitier, des ferrailles et/ou du calcaire.

5. Procédé selon la revendication 4,
caractérisé en ce que, lorsque l'on utilise les moyens de refroidissement porteurs d'oxygène, minerai, calamine et, le cas échéant, laitier, la quantité d'oxygène apportée par ceux-ci est retirée de la quantité d'oxygène de soufflage.

6. Procédé selon la revendication 5,
caractérisé en ce -que la quantité d'oxygène est choisie de façon dépendant de la teneur visée en phosphore ou en carbone ou de la teneur en FeO plus élevée corrélée avec celles-ci.

7. Procédé selon une des revendications précitées,
caractérisé en ce que, pour une quantité d'oxygène suffisante pour atteindre la teneur visée en phosphore ou en carbone, pour laquelle cependant la température visée ne peut pas être atteinte, un agent de chauffage est ajouté à la matière en fusion.

8. Procédé selon la revendication 7,
caractérisé en ce que, comme agent de chauffage, on utilise généralement des combustibles fossiles, FeSi ou de l'aluminium.
